(19) Europäisches Patentamt
European Patent Office
Office européen des brevets

(11) **EP 1 395 809 B1**

(12) **FASCICULE DE BREVET EUROPEEN**

(45) Date de publication et mention
de la délivrance du brevet:
**21.07.2010 Bulletin 2010/29**

(21) Numéro de dépôt: **02735532.0**

(22) Date de dépôt: **03.05.2002**

(51) Int Cl.:
**G01N 21/43** (2006.01)

(86) Numéro de dépôt international:
**PCT/FR2002/001528**

(87) Numéro de publication internationale:
**WO 2002/095374 (28.11.2002 Gazette 2002/48)**

(54) **REFRACTOMETRE ET METHODE DE MESURE DE L'INDICE DE REFRACTION**

REFRAKTOMETER UND VERFAHREN ZUR MESSUNG DES BRECHUNGSINDEXES

REFRACTOMETER AND METHOD FOR MEASURING REFRACTIVE INDEX

(84) Etats contractants désignés:
**AT BE CH CY DE DK ES FI FR GB GR IE IT LI LU MC NL PT SE TR**

(30) Priorité: **23.05.2001 FR 0106866**

(43) Date de publication de la demande:
**10.03.2004 Bulletin 2004/11**

(73) Titulaire: **Institut Français du Pétrole**
**92852 Rueil-Malmaison Cedex (FR)**

(72) Inventeur: **FROT, Didier**
**94600 Choisy Le Roi (FR)**

(56) Documents cités:
**EP-A- 0 043 522    EP-A- 0 071 143**
**FR-A- 2 578 978    US-A- 3 650 631**

## Description

La présente invention a trait au domaine de la détermination de l'indice de réfraction d'un milieu. Elle propose une méthode ainsi qu'un réfractomètre pour effectuer une mesure absolue de l'indice de réfraction.

La détermination de l'indice de réfraction d'un milieu présente de nombreuses applications, notamment la reconnaissance d'un composé et/ou la composition d'un mélange, le suivi de qualité en production industrielle.

Dans la présente description, l'indice de réfraction d'un milieu désigne le rapport de la vitesse de propagation de la lumière dans le vide divisée par la vitesse de propagation de la lumière dans ce milieu.

Un rayon lumineux désigne une onde électromagnétique dont la longueur d'onde appartient aux domaines des ondes ultraviolettes, visibles et infrarouges, mais aussi au domaine des ondes radio.

L'intensité d'un rayon, lumineux représente le flux des photons traversant une surface pendant un temps donné.

Actuellement, les méthodes de détermination de l'indice de réfraction d'un milieu sont fondées sur les lois de Descartes décrivant le phénomène de réfraction lors du passage d'un rayon lumineux à travers un dioptre composé du milieu à étudier et d'un milieu d'indice de réfraction connu. Ces méthodes mesurent en général des caractéristiques du rayon réfracté par le dioptre pour déterminer l'indice de réfraction du milieu étudié. Plus particulièrement, certaines méthodes exploitent l'existence d'un angle limite de réfraction. Ces méthodes consistent à déterminer l'angle d'un rayon incident pour lequel la réflexion est totale et la réfraction est inexistante. Cet angle correspond à ce qu'on appelle l'angle critique.

On peut classer les réfractomètres mesurant des caractéristiques d'un rayon réfracté ou de l'angle critique en deux catégories d'instruments.

D'une part, il existe les réfractomètres effectuant une mesure absolue de l'indice de réfraction. Ces outils permettent, entre autre, de contrôler la qualité d'un produit, d'identifier un composant ou bien de déterminer les proportions des différents composants d'un mélange. Ils sont couramment utilisés par l'industrie chimique, pharmaceutique et agroalimentaire, et en laboratoire d'analyse.

D'autre part, il existe des réfractomètres effectuant une mesure différentielle d'indice de réfraction entre deux milieux. L'application la plus connue de cette catégorie d'instruments est l'analyse de la composition d'une solution liquide après séparation, par procédé de chromatographie, des différents composants lors du passage de la solution liquide sur un solide adsorbant.

Le document EP 043 667 présente un réfractomètre utilisant la comparaison entre l'intensité d'un premier rayon réfléchi et l'intensité d'un deuxième rayon réfléchi. L'intensité du premier rayon réfléchi dépend de l'indice de réfraction du milieu étudié, tandis que l'intensité du deuxième rayon réfléchi est indépendante de l'indice de réfraction du milieu étudié. Cependant la valeur de l'intensité du deuxième rayon est totalement indépendante de l'intensité du premier rayon. La mesure d'intensité de deux rayons lumineux différents présente notamment les inconvénients de suivre une démarche complexe pour mesurer un indice de réfraction et de perdre en précision de mesure.

Le document US 3 650 631 propose un réfractomètre utilisant la comparaison entre l'intensité d'un premier rayon réfléchi et l'intensité d'un deuxième rayon réfléchi sur un dioptre composé du milieu étudié et d'un solide de référence. Le premier rayon tombe sur le dioptre selon un angle d'incidence inférieur à l'angle critique, le deuxième rayon tombe sur le dioptre selon un angle d'incidence supérieur à l'angle critique. Le réfractomètre présenté par le document US 3 650 631 nécessite un angle critique. Or l'angle critique est déterminé par les indices de réfraction des milieux composant le dioptre. Donc cette exigence impose des limitations à la valeur d'indice de réfraction mesurable par le réfractomètre du document US 3 650 631. De plus, la détermination de l'indice de réfraction est basée sur la mesure de l'intensité du second rayon qui subit une réflexion totale sur le dioptre. Or, en réflexion totale (angle d'incidence supérieur à l'angle critique), il apparaît l'onde évanescente, phénomène qui fait passer le rayon incident du milieu de référence dans le milieu étudié avant d'être réfléchi dans le milieu de référence. Dans le cas d'un milieu étudié fortement absorbant, l'intensité du second rayon réfléchi est atténuée et la détermination de l'indice de réfraction perd en précision.

Le document US 5,946,096 décrit un réfractomètre déterminant la différence de phase entre la polarisation S et la polarisation P.

Cependant, les réfractomètres mesurant des caractéristiques du rayon lumineux réfracté ou l'angle critique sont affublés de plusieurs limitations d'utilisation.

Une limitation concerne la plage restreinte de mesure de l'indice de réfraction du milieu étudié. Un réfractomètre à mesure absolue balaye généralement un intervalle compris environ entre 1,3 et 1,7 UIR (Unité d'Indice de Réfraction) pour les milieux liquides et un intervalle compris environ entre 1,1 et 1,2 UIR pour les milieux gazeux, avec une sensibilité d'environ $10^{-4}$ UIR. La plage de mesure d'un réfractomètre à mesure différentielle s'étend approximativement sur $10^{-3}$ UIR avec une sensibilité de $10^{-7}$ UIR.

De plus, la mesure basée sur la caractéristique du rayon réfracté empêche la détermination de l'indice de réfraction d'un milieu opaque puisque le rayon réfracté est absorbé par le milieu opaque. En déterminant l'angle à partir duquel la réflexion est totale, l'onde évanescente, phénomène qui fait passer le rayon incident sur un dioptre du premier milieu dans le deuxième milieu avant sa réflexion dans le premier milieu, est également absorbée par le deuxième milieu si celui-ci est opaque. Ainsi, la mesure de l'indice de réfraction des milieux tels que par exemple les bruts de pétrole, les encres et les peintures est inaccessible par de tels instruments.

En outre, la détermination de l'indice de réfraction d'un fluide en écoulement peut être imprécise. En effet, si le fluide n'a pas de caractéristiques optiques homogènes du fait de son écoulement, le rayon réfracté, ou l'onde évanescente, se propageant dans le fluide subit des altérations. Les modifications des caractéristiques du rayon réfracté ou de l'onde évanescente sont d'autant plus importantes que l'écoulement du fluide est turbulent.

Pour des raisons identiques à la détermination de l'indice de réfraction d'un fluide en écoulement, la détermination de l'indice de réfraction d'un milieu dispersé peut être imprécise car les milieux dispersés n'ont pas de caractéristiques optiques homogènes.

La présente invention a pour but de proposer une méthode ainsi qu'un réfractomètre permettant d'effectuer une mesure absolue d'un indice de réfraction, dépassant les limitations de l'art antérieur.

L'invention consiste à diriger un rayon lumineux incident sur un dioptre composé d'un milieu d'indice de réfraction connu et du milieu étudié, puis à mesurer l'intensité du rayon lumineux réfléchi. Le rapport entre l'intensité du rayon incident et celle du rayon réfléchi permet de calculer, au moyen des formules de Fresnel, l'indice de réfraction du milieu étudié.

Une des difficultés de la mesure de l'intensité du rayon lumineux réfléchi provient de sa faible intensité.

L'invention concerne une méthode de mesure de l'indice de réfraction d'un premier milieu, comportant les étapes suivantes :

- on dirige un rayon lumineux incident sur un premier dioptre composé du premier milieu et d'un deuxième milieu d'indice de réfraction connu pour produire un rayon lumineux réfléchi,
- on mesure l'intensité dudit rayon lumineux incident et l'intensité dudit rayon lumineux réfléchi,
- on détermine l'indice de réfraction du premier milieu en tenant compte au moins de l'indice de réfraction du deuxième milieu, de l'intensité du rayon lumineux incident et de l'intensité du rayon lumineux réfléchi.

On peut déterminer l'indice de réfraction du premier milieu par une formule qui lie l'intensité du rayon lumineux incident à l'intensité du rayon lumineux réfléchi au niveau du premier dioptre en tenant compte de l'indice de réfraction du premier milieu et de l'indice de réfraction du deuxième milieu, par exemple les formules de Fresnel.

Dans la méthode selon l'invention, on peut coder le rayon lumineux incident en faisant, par exemple varier l'intensité du rayon lumineux incident selon un signal périodique et/ou en faisant varier l'intensité moyenne du rayon lumineux incident selon un signal en créneau.

Dans la méthode selon l'invention, on peut diviser un rayon lumineux source pour former un rayon lumineux de référence et ledit rayon lumineux incident, par exemple au moyen d'un deuxième dioptre.

On peut déterminer le rapport de l'intensité dudit rayon lumineux de référence sur l'intensité dudit rayon lumineux incident en utilisant ledit premier milieu dont l'indice de réfraction est connu, en mesurant l'intensité dudit rayon lumineux de référence et l'intensité du rayon lumineux réfléchi et en utilisant une formule, par exemple les formules de Fresnel, qui lie l'intensité du rayon lumineux incident à l'intensité du rayon lumineux réfléchi au niveau dudit premier dioptre en tenant compte des indices de réfraction du premier milieu et du deuxième milieu.

Dans la méthode de mesure selon l'invention, on peut mesurer l'intensité du rayon lumineux de référence pour déterminer l'intensité du rayon lumineux incident.

Dans la méthode de mesure selon l'invention, dans laquelle on mesure l'intensité du rayon lumineux réfracté dans le premier milieu et on détermine l'absorption dans le premier milieu du rayon lumineux réfracté.

Méthode de mesure selon l'invention dans laquelle l'angle d'incidence du rayon lumineux incident par rapport à la direction normale au premier dioptre peut être inférieur à l'angle critique et de préférence inférieur à 10°.

La méthode selon l'invention peut être appliquée à la mesure de l'indice de réfraction d'un milieu opaque, par exemple un pétrole brut.

L'invention concerne également un réfractomètre comportant une source lumineuse, un premier dioptre composé d'un premier milieu d'indice inconnu et d'un deuxième milieu d'indice connu et d'au moins un capteur mesurant l'intensité d'un rayon lumineux incident et l'intensité d'un rayon lumineux réfléchi provenant de la réflexion dudit rayon lumineux incident sur ledit premier dioptre. Le premier milieu peut être contenu dans une enceinte constituée d'une enveloppe et du deuxième milieu.

Le réfractomètre selon l'invention peut comporter un moyen de codage du rayon lumineux émis par ladite source lumineuse et comporter un moyen de décodage des mesures effectuées par ledit capteur, ledit moyen de décodage échange des informations avec le moyen de codage. Le réfractomètre peut également comporter un élément optique, par exemple un deuxième dioptre formé par la surface du premier milieu située à l'extérieur de l'enceinte ou une lame semi-réfléchissante, adapté à diviser un rayon lumineux en deux rayons lumineux pour former un rayon de mesure et ledit rayon incident, l'intensité dudit rayon de mesure étant mesurée par un capteur.

Le réfractomètre selon l'invention peut comporter au moins un capteur mesurant l'intensité d'un rayon lumineux réfracté dans le premier milieu.

Selon le réfractomètre de l'invention, l'angle d'incidence du rayon lumineux incident par rapport à la direction normale au premier dioptre peut être inférieur à l'angle critique, de préférence inférieur à 10°.

La méthode et le réfractomètre selon l'invention présentent notamment les avantages de proposer un intervalle de mesure pouvant être compris entre 1 et 2,4 UIR pour tous milieux, en particulier pour les milieux fluides gazeux et liquides. Du fait que le rayon sur lequel porte la mesure ne traverse pas le milieu étudié, en comparaison avec le rayon réfracté, ou pénètre beaucoup moins dans le milieu étudié que l'onde évanescente pour un rayon incident au voisinage de l'angle critique, il est possible de déterminer l'indice de réfraction d'un milieu opaque, d'un milieu fluide en écoulement ou d'un milieu dispersé.

En mesurant directement l'intensité du rayon incident et du rayon réfléchi, on simplifie la démarche pour mesurer l'indice de réfraction et on améliore la précision de la mesure. Selon la présente invention, l'indice de réfraction absolu peut être obtenu avec une précision au moins égale à $10^{-4}$ UIR.

Le réfractomètre selon l'invention ne nécessite pas de calibrage préalable, ni optique, ni mécanique, ni électrique, avant d'effectuer une mesure.

Selon l'agencement du réfractomètre de l'invention, le milieu à étudier est séparé des autres moyens du réfractomètre par une enceinte constituée du milieu d'indice de réfraction connu composant une partie du dioptre et éventuellement d'une enveloppe. Ainsi, il est possible de mesurer l'indice de réfraction d'un milieu sous pression. De plus, en choisissant un matériau et une géométrie appropriés pour le milieu d'indice connu et pour l'enveloppe, le réfractomètre présentera une haute résistance mécanique et/ou chimique. En outre, la séparation du milieu à étudier des autres éléments du réfractomètre facilite la maintenance et l'entretien de l'appareil.

De plus, le réfractomètre selon l'invention peut être facilement complété de moyens permettant d'effectuer une mesure du phénomène d'absorption du milieu étudié.

D'autres détails, particularités et avantages de l'invention seront mieux compris à la lecture d'un exemple de réalisation de l'invention décrit en référence aux figures annexées parmi lesquelles :

- la figure 1 représente le principe d'un réfractomètre selon l'invention,
- la figure 2 schématise un réfractomètre selon l'invention,
- la figure 3 représente un élément du réfractomètre,
- la figure 4 schématise le phénomène de réfraction et de réflexion d'un rayon lumineux dirigé sur un dioptre.

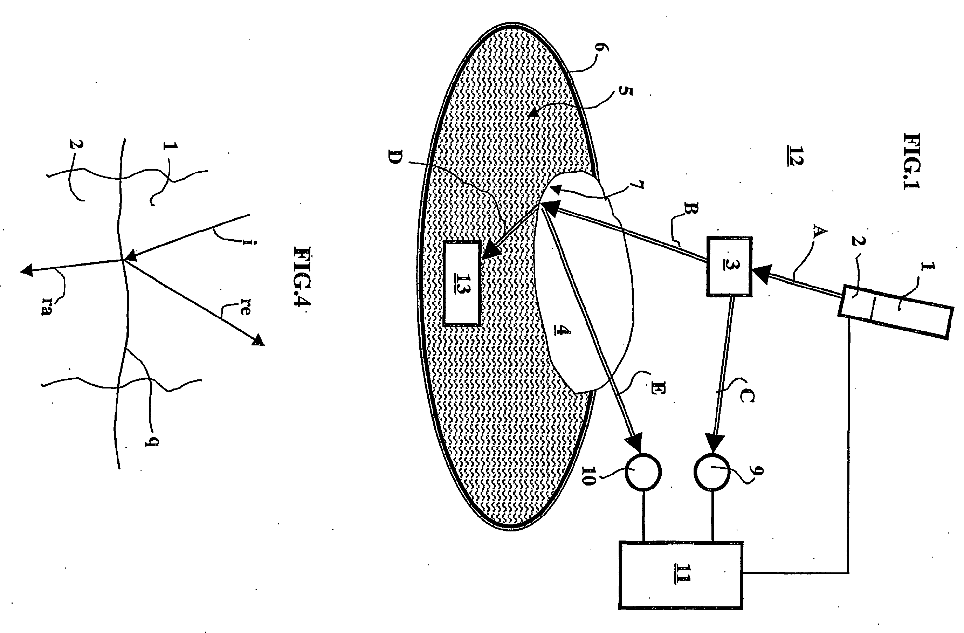

Selon le réfractomètre, représenté schématiquement par la figure 1, le milieu 5 d'indice de réfraction inconnu est contenu dans une enceinte délimitée par l'enveloppe 6. Une fenêtre dans l'enveloppe 6 est fermée par un milieu 4 d'indice de réfraction connu. A l'extérieur de l'enceinte, se trouve un milieu ambiant 12 d'indice de réfraction connu.

L'enceinte peut prendre diverse forme, sa fonction première étant de contenir le milieu 5. Ainsi l'enceinte peut être une conduite dans laquelle circule le milieu 5, un récipient ouvert ou fermé. Comme le milieu 5 peut être sous pression et/ou un agent chimique actif, l'enceinte est construite de manière à pouvoir résister aux contraintes mécaniques et/ou chimiques qui lui sont imposées par le milieu 5. Le milieu 4 doit, par sa forme et son matériau, avoir les mêmes caractéristiques de résistance mécanique et chimique que l'enveloppe 6.

La surface du milieu 4 en contact avec le milieu 5 forme un dioptre 7. Le milieu 4 est choisi tel qu'il n'absorbe pas, ou très peu, de lumière, que son indice de réfraction est connu avec au moins une précision de $10^{-4}$ UIR et que la surface formant le dioptre 7 ne produit pas d'effets indésirables d'interférences, de diffusion ou de diffraction. Le milieu 4 peut être par exemple réalisé sous la forme d'un hublot en diamant d'indice de réfraction 2,41 UIR.

Le milieu ambiant 12 doit être sans effet sur la lumière. Il peut consister en une atmosphère contrôlée ou plus simplement être de l'air ambiant.

Le réfractomètre comporte une source lumineuse 1. La source lumineuse 1 peut émettre un rayon lumineux monochromatique, au moyen par exemple d'un filtre, dont la stabilité est de $10^{-4}$ pour l'intensité moyenne émise. Elle peut consister en une diode laser ou un laser émettant par exemple un rayon d'intensité environ égale à 5 mW. Des moyens de codage 2 permettent de coder le rayon lumineux émis par la source 1. La source lumineuse 1 et les moyens de codage 2 sont situés dans le milieu ambiant 12.

Un élément optique 3, placé dans le milieu ambiant 12 entre la source lumineuse 1 et le dioptre 7, permet de diviser un rayon lumineux incident en deux rayons lumineux de caractéristiques identiques au rayon lumineux incident, mais d'intensités différentes. La somme des intensités des deux rayons issus de l'élément optique 3 peut être égale à l'intensité du rayon incident. L'élément optique 3 peut être une lame semi-réfléchissante ou un dioptre.

Deux photo détecteurs 9 et 10 adaptés à mesurer l'intensité d'un rayon lumineux sont installés dans le milieu ambiant 12. Dans le milieu 5, est disposé un photo détecteur 13 destiné à mesurer l'intensité lumineuse d'un rayon lumineux. Le photo détecteur 13 est mobile en translation de manière à pouvoir faire varier la distance le séparant du dioptre 7. On peut également maintenir le photo détecteur 13 à l'extérieur du milieu 5 en utilisant un doigt en verre permettant de conduire un rayon lumineux d'une première extrémité du doigt, qui plonge dans le milieu 5, jusqu'à la seconde extrémité, qui est située à l'extérieur du milieu 5. Le photo détecteur 13 mesure l'intensité du rayon lumineux issu de ladite seconde extrémité du doigt en verre. Le doigt en verre, solidaire du photo détecteur 13, peut être mobile en translation. De plus le doigt en verre, de par la nature de son matériau, ne modifie pas la valeur de l'intensité du rayon lumineux qu'il transmet.

Des moyens de traitement du signal 11 sont reliés aux moyens de codage 2 et aux photo détecteurs 9, 10 et 13. Ils permettent de décoder les signaux captés par les photo détecteurs 9, 10 et 13 compte tenu du codage effectué par les moyens 2 et, de comparer et d'analyser les signaux captés par les photo détecteurs 9, 10 et 13.

Le réfractomètre peut être muni de moyen de réfrigération afin d'évacuer l'énergie provenant notamment de la source lumineuse 1 et ainsi éviter de modifier la valeur de l'indice de réfraction du milieu 5 qui varie environ de $10^{-4}$ UIR par degré Celsius.

La source lumineuse 1, pourvue des moyens de codage 2, permet de produire le rayon lumineux A. Le rayon lumineux A, après avoir traversé le milieu ambiant 12, entre dans l'élément optique 3 pour être divisé en deux rayons lumineux B et C.

Le photo détecteur 9 mesure l'intensité de ce rayon lumineux C.

En sortie de l'élément optique 3, le rayon lumineux B se propage dans le milieu ambiant 12 puis dans le milieu 5 jusqu'au dioptre 7 pour y produire un rayon lumineux E réfléchi et un rayon lumineux D réfracté.

L'intensité ID du rayon lumineux D réfracté dans le milieu 5 est mesurée par le photo détecteur 13 afin de déterminer la transmission du milieu 5. La direction de la translation du photo détecteur 13 est choisie de préférence parallèle à la direction du rayon lumineux. Le photo détecteur effectue au moins une mesure de l'intensité ID à une distance d entre le photo détecteur 13 et le dioptre 7. De préférence le photo détecteur 13 effectue au moins trois mesures de l'intensité $ID_1$, $ID_2$ et $ID_3$ du rayon D à respectivement trois distances $d_1$, $d_2$ et $d_3$ entre le photo détecteur 13 et le dioptre 7. Si le photo détecteur 13 est pourvu d'un doigt de verre les distances d, $d_1$, $d_2$ et $d_3$ correspondent à la distance séparant le dioptre 7 de la première l'extrémité du doigt de verre car le doigt de verre ne modifie pas l'intensité ID du rayon D qu'il capte et qu'il transmet au photo détecteur 13.

Le rayon E se propage dans le milieu 4 puis sort dans le milieu ambiant 12. Le photo détecteur 10 mesure l'intensité IE de ce rayon lumineux E.

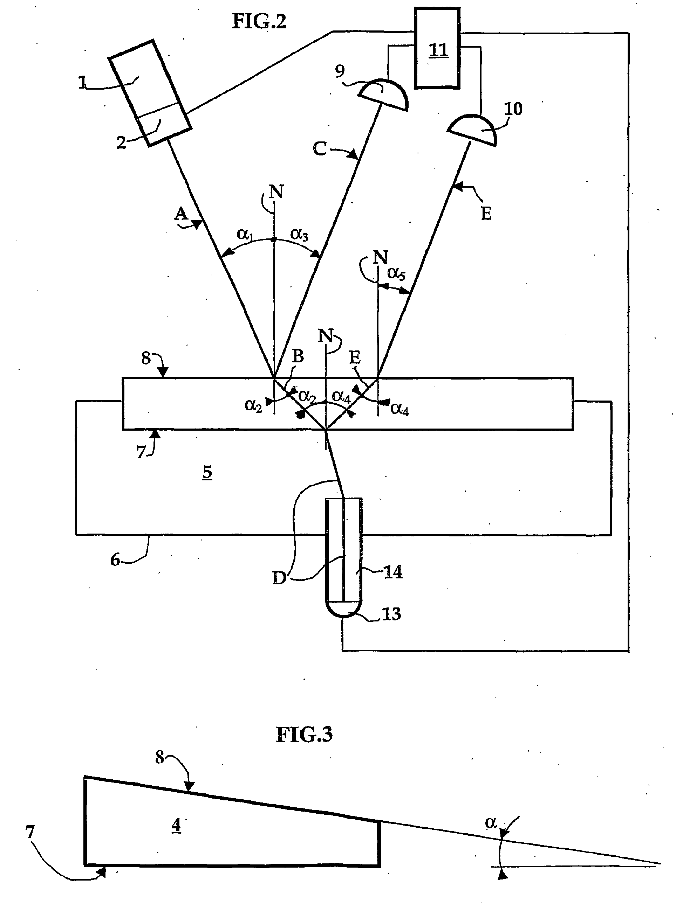

La figure 2 représente un autre mode de réalisation du réfractomètre selon l'invention. Les numéros de références de la figure 2, qui sont identiques à ceux de la figure 1, désignent des éléments identiques. Ainsi on retrouve sur la figure 2 la source lumineuse 1, les moyens de codage 2, le milieu 4, le milieu 5, l'enveloppe 6, le dioptre 7, les moyens de traitement du signal 11, le milieu 12, les photo détecteurs 9, 10 et 13, selon une disposition analogue à la figure 1.

Sur la figure 2, l'élément optique 3 est matérialisé par le dioptre 8 formé par l'interface entre le milieu ambiant 12 et le milieu 4. Les deux parties du milieu 4 formant les dioptres 7 et 8 consistent en deux plans. Ces deux plans peuvent être parallèles comme représenté sur la figure 2 ou bien peuvent former un angle $\alpha$ comme représenté sur la figure 3.

Le photo détecteur 13 est muni d'un doigt de verre 14 qui prend la forme d'un cylindre.

Sur la figure 2, la source lumineuse 1 munie des moyens de codage 2 produit un rayon lumineux A. L'angle d'incidence du rayon lumineux A par rapport à la direction normale N au dioptre 8 est $\alpha 1$. Au niveau du dioptre 8, le rayon A est divisé en un rayon lumineux C réfléchi dans le milieu ambiant 12 et un rayon lumineux B réfracté dans le milieu 4.

Le rayon lumineux C réfléchi forme un angle $\alpha 3$ par rapport à la direction normale N au dioptre 8. D'après le phénomène de réflexion l'angle $\alpha 3$ est égale à l'angle $\alpha 1$. Le photo détecteur 9 mesure l'intensité lumineuse IC du rayon lumineux C.

Le rayon lumineux B forme un angle $\alpha 2$ par rapport à la direction normale N au dioptre 8. Le dioptre 8 étant un plan perpendiculaire au plan formant le dioptre 7, le rayon lumineux B forme un angle $\alpha 2$ par rapport à la direction normale N au dioptre 7. La valeur de l'angle $\alpha 2$ est dictée par les lois de réfraction d'un rayon lumineux de Descartes : $n12 \cdot \sin(\alpha 1) = n4 \cdot \sin(a4)$ avec n12 l'indice de réfraction du milieu ambiant 12 et n4 l'indice de réfraction du milieu 4. Au niveau du dioptre 7, le rayon lumineux B est divisé en un rayon lumineux E réfléchi dans le milieu 4 et un rayon lumineux D réfracté dans le milieu 5.

Le rayon lumineux D se propage dans le milieu 5, puis entre dans le doigt en verre 14 par une première extrémité. Le photo détecteur 13 mesure l'intensité ID du rayon lumineux D qui sort par une seconde extrémité du doigt en verre 14. Le photo détecteur 13 effectue au moins trois mesures de l'intensité $ID_1$, $ID_2$ et $ID_3$ du rayon D à respectivement trois distances $d_1$, $d_2$ et $d_3$ entre le doigt en verre 14 et le dioptre 7

Le rayon lumineux E forme un angle $\alpha 4$ par rapport à la normale au dioptre 8. D'après le phénomène de réflexion, l'angle $\alpha 4$ est égale à l'angle $\alpha 2$. Le rayon lumineux E se propage dans le milieu 4 puis se réfracte au dioptre 8 dans le milieu ambiant 12 selon un angle $\alpha 5$ par rapport à la direction normale N au dioptre 8. Le dioptre 8 étant un plan perpendiculaire au plan formant le dioptre 7, le rayon lumineux E forme un angle $\alpha 4$ par rapport à la direction normale N au dioptre 8. La valeur de l'angle $\alpha 5$ est dictée par les lois de réfraction d'un rayon lumineux de Descartes : $n4 \cdot \sin(a4) = n12 \cdot \sin(a5)$ avec n12 l'indice de réfraction du milieu ambiant 12 et n4 l'indice de réfraction du milieu 4. L'intensité IE du rayon lumineux E est mesurée par le photo détecteur 10.

Selon la configuration de la figure 2, l'angle $\alpha 3$ est égale à l'angle $\alpha 5$. En imposant les distances qui séparent les différents éléments du réfractomètre, l'emplacement de ces éléments est précisément défini. En utilisant un milieu 4 selon la figure 3, il faut tenir compte de l'angle d'inclinaison du dioptre 7 par rapport au dioptre 8 pour définir la trajectoire des différents rayons lumineux.

Les photo détecteurs 9 et 10 peuvent être remplacés par un unique photo détecteur qui mesure successivement et alternativement l'intensité IC du rayon lumineux C puis l'intensité IE du rayon lumineux E.

L'agencement des composants du réfractomètre selon l'invention est choisi pour que l'angle d'incidence du rayon lumineux B par rapport à la direction normale N au dioptre 7 soit inférieur à l'angle critique, s'il existe. En effet, selon les formules de Fresnel, l'intensité du rayon lumineux réfléchi E dépend de l'indice de réfraction du milieu 5 pour tout angle d'incidence du rayon lumineux B compris entre 0° et l'angle critique de réflexion totale. Pour un angle d'incidence du rayon lumineux B supérieur à l'angle critique, l'intensité du rayon lumineux B peut être absorbée dans le milieu 5 du fait du phénomène de l'onde évanescente.

De préférence, l'agencement des composants du réfractomètre selon l'invention est choisi pour que l'angle d'incidence du rayon lumineux B par rapport à la direction normale N au dioptre 7 soit inférieur à 10°, avantageusement inférieur à 3° et préférentiellement nul. En effet, l'intensité du rayon lumineux réfléchi E dépend de l'état de polarisation du rayon lumineux B, sauf lorsque l'angle d'incidence du rayon lumineux B est faible (au moins inférieur à 10°, avantageusement inférieur à 3° et de préférence nul). Par conséquent, en utilisant un angle d'incidence du rayon lumineux B faible, l'intensité du rayon lumineux E est très peu influencée par la polarisation du rayon lumineux B, donc par la polarisation du rayon émis par la source de lumière 1. Cela permet d'accroître la précision et la fiabilité des mesures d'indice de réfraction selon la présente invention.

Le phénomène de réflexion produisant sur le dioptre 7 un rayon lumineux réfléchi E d'intensité de l'ordre de quelques centièmes de l'intensité du rayon incident B, l'élément optique 3 est choisi de manière à ce que l'intensité IC du rayon lumineux C représente également quelques centièmes de l'intensité IB du rayon lumineux B. Ainsi les moyens de traitement du signal 11 analysent, par l'intermédiaire des photo détecteurs 9 et 10, des rayons d'intensités lumineuses de valeurs comparables. Cela est préférable pour les éléments électroniques d'amplification et de comparaison des moyens de traitement du signal 11 et améliore la précision des mesures et des résultats.

Les moyens de codage 2 permettent de pourvoir le rayon lumineux produit par la source lumineuse 1 de caractéristiques reconnaissables. L'intensité du rayon lumineux A peut varier périodiquement, par exemple en variant sinusoïdalement à fréquence fixe d'environ 10kHz, autour d'une valeur moyenne donnée. La variation sinusoïdale de l'intensité du rayon lumineux A n'étant pas affectée par les effets de l'élément optique 3, ni par les phénomènes de réflexion et de réfraction, les intensités des rayons lumineux C, D et E varient de la même manière sinusoïdale à environs 10 kHz, mais autour d'une valeur moyenne différente. Les moyens de traitement du signal 11 sont informés du codage effectué par les moyens 2 et pourront distinguer, parmi les informations fournies par les capteurs 9, 10 et 13, les intensités des rayons lumineux C, D et E des autres signaux parasites tels que ceux de la lumière ambiante.

De plus, les moyens de codage 2 peuvent produire un rayon lumineux d'intensité en créneaux présentant des intermittences dans le temps entre un rayon lumineux de pleine intensité et un rayon lumineux d'intensité nulle. Le signal en créneau peut consister en une phase de pleine intensité pendant un temps $t_1$ de 1 seconde puis une phase d'intensité nulle pendant un temps $t_2$, par exemple de 2 secondes. Le cycle constitué de la succession des durées $t_1$ et $t_2$ est répété pendant le temps de la mesure. L'énergie absorbée localement par le milieu 5 au niveau du dioptre 7 pendant la phase de pleine intensité a le temps de se diffuser et de se dissiper dans le milieu 5 pendant la phase d'intensité nulle. Ainsi, la variation de la valeur de l'indice de réfraction du milieu 5 due à l'élévation de température reste faible. Le codage de l'intensité du rayon lumineux A sous forme de signal en créneau est particulièrement adapté pour la mesure de l'indice de réfraction des milieux opaques qui absorbent assez rapidement la lumière.

Le phénomène de réflexion d'un rayon lumineux, sur lequel se base l'invention, est décrit en relation avec la figure 4 par exemple par les formules de Fresnel qui lie l'intensité Ii du rayon incident i à l'intensité Ire du rayon réfléchi re au niveau d'un dioptre q en fonction des indices n1 et n2 de réfraction des deux milieux 1 et 2 composant le dioptre. Le rayon ra représente le rayon réfracté dans le milieu 2. Les formules de Fresnel décrivent le phénomène de réflexion et la polarisation de la lumière incidente.

Sans sortir du cadre de l'invention, il est possible d'utiliser toute formule, équivalente aux formules de Fresnel, décrivant le phénomène de réflexion sur un dioptre du point de vue des intensités des rayons incident et réfléchi en tenant compte des indices de réfraction des deux milieux composant le dioptre. Lorsque l'angle du rayon incident i sur le dioptre q est nul, les formules de Fresnel s'écrivent sous la forme d'une expression unique :

$$\frac{I_i}{I_r} = \frac{\left[\left(\frac{n_2}{n_1}\right) - 1\right]^2}{\left[\left(\frac{n_2}{n_1}\right) + 1\right]^2}$$

Selon l'invention, en mesurant l'intensité IC du rayon C et en connaissant la répartition de l'intensité IA du rayon A entre les rayons B et C par l'élément optique 3, on détermine l'intensité IB du rayon B. En mesurant l'intensité IC du rayon C pour connaître l'intensité IB du rayon B, on obtient une mesure plus précise car la valeur de l'intensité IC est comparable à l'intensité IE.

En ayant déterminé l'intensité IB du rayon lumineux B, en mesurant l'intensité IE du rayon lumineux E et en connaissant l'indice de réfraction n4 du milieu 4 on détermine à l'aide des formules de Fresnel l'indice de réfraction n5 du milieu étudié 5.

Les phénomènes de réflexion et de réfraction notamment au niveau de l'élément optique 3, au passage du rayon B du milieu 12 dans le milieu 4 et au passage du rayon E du milieu 4 dans le milieu 12 peuvent être avantageusement négligés car leur influence sur les intensités IB et IE sont comparables.

Pour déterminer précisément, lors du passage du rayon A dans l'élément optique 3, la valeur du rapport de l'intensité IC du rayon lumineux C divisée par l'intensité IB du rayon lumineux B, on dispose un milieu 5 d'indice de réfraction n5 connu dans le réfractomètre selon l'invention. En utilisant les formules de Fresnel, en connaissant les indices de réfraction n4 et n5 des milieux 4 et 5, et en mesurant l'intensité IE du rayon lumineux IE, on détermine l'intensité IB du rayon lumineux B. Comme l'intensité IC du rayon lumineux C est mesurée, on connaît avec précision le rapport de l'intensité IC divisé par l'intensité IB, ledit rapport étant utilisé pour la mise en oeuvre du réfractomètre selon l'invention afin de déterminer l'indice de réfraction d'un milieu 5. Ce rapport est connu sous le terme de « constante de l'appareil » de mesure.

L'indice de réfraction n d'un milieu peut être écrit sous la forme d'un nombre complexe $n = r + i \cdot \chi$, r étant la partie réelle et $\chi$ la partie imaginaire. La partie imaginaire $\chi$ décrit le phénomène d'absorption d'un rayon se propageant dans un milieu opaque. En traversant le milieu 5, l'intensité ID du rayon D diminue en fonction de la distance d parcourue à partir du dioptre 7, selon une loi de la forme : $ID(d)=k \cdot e^{\chi \cdot d}$, k étant la valeur de l'intensité du rayon ID au niveau du dioptre 7 c'est à dire pour d=0.

Ainsi en mesurant l'intensité ID du rayon D à au moins une distance d entre le photo détecteur 13 et le dioptre 7, de préférence en mesurant au moins trois intensités $ID_1$, $ID_2$ et $ID_3$ à respectivement trois distances $d_1$, $d_2$ et $d_3$ entre le photo détecteur 13 et le dioptre 7, on peut déterminer la partie imaginaire $\chi5$ du milieu 5. Si le photo détecteur 13 est muni d'un doigt en verre, les distances d, $d_1$, $d_2$ et $d_3$ correspondent à la distance entre le dioptre (7) et une extrémité du doigt en verre.

La mesure de la partie imaginaire $\chi$ permet de caractériser plus précisément le milieu étudié, elle permet notamment d'évaluer le caractère absorbant du milieu étudié.

Ainsi le réfractomètre selon l'invention permet de déterminer simultanément à une longueur d'onde donnée la valeur de l'indice de réfraction et la valeur de l'absorption d'un milieu étudié.

## Revendications

1. Méthode de mesure de l'indice ce réfraction d'un premier milieu (5), comportant les étapes suivantes :

   - on divise un rayon lumineux source pour former un rayon lumineux de référence et un rayon lumineux incident,
   - on dirige le rayon lumineux incident sur un premier dioptre (7) composé du premier milieu (5) et d'un deuxième milieu (4) d'indice de réfraction connu pour produire un rayon lumineux réfléchi, l'angle d'incidence du rayon lumineux incident par rapport à la direction normale au premier dioptre étant inférieur à l'angle critique et inférieur à 10°,
   - on mesure l'intensité du rayon lumineux de référence pour déterminer l'intensité du rayon lumineux incident,
   - on mesure l'intensité dudit rayon lumineux réfléchi,
   - on détermine l'indice de réfraction du premier milieu (5) en tenant compte au moins de l'indice de réfraction du deuxième milieu (4), de l'intensité du rayon lumineux incident et de l'intensité du rayon lumineux réfléchi.

2. Méthode selon la revendication 1, dans laquelle on détermine l'indice de réfraction du premier milieu (5) par une formule qui lie l'intensité du rayon lumineux incident à l'intensité du rayon lumineux réfléchi au niveau du premier dioptre (7) en tenant compte de l'indice de réfraction du premier milieu (5) et de l'indice de réfraction du deuxième milieu (4).

3. Méthode selon l'une des revendications 1 et 2, dans laquelle on détermine l'indice de réfraction du premier milieu (5) avec les formules de Fresnel.

4. Méthode selon l'une des revendications 1 à 3, dans laquelle on code le rayon lumineux incident.

5. Méthode selon la revendication 4, dans laquelle on fait varier l'intensité du rayon lumineux incident selon un signal périodique.

6. Méthode selon l'une des revendications 4 et 5, dans laquelle on fait varier l'intensité moyenne du rayon lumineux incident selon un signal en créneau.

7. Méthode selon l'une des revendications précédentes, dans laquelle on divise ledit rayon lumineux source par réflexion et réfraction sur un deuxième dioptre (8).

8. Méthode selon l'une des revendications précédentes, dans laquelle on utilise ledit premier milieu (5) dont l'indice de réfraction est connu, on mesure l'intensité dudit rayon lumineux de référence et l'intensité du rayon lumineux réfléchi et on détermine le rapport de l'intensité dudit rayon lumineux de référence sur l'intensité dudit rayon lumineux incident en utilisant une formule qui lie l'intensité du rayon lumineux incident à l'intensité du rayon lumineux réfléchi au niveau dudit premier dioptre (7) en tenant compte des indices de réfraction du premier milieu (5) et du deuxième milieu (4).

9. Méthode de mesure selon l'une des revendications précédentes, dans laquelle on mesure l'intensité du rayon lumineux réfracté dans le premier milieu (5) et on détermine l'absorption par le premier milieu (5) du rayon lumineux réfracté.

10. Méthode de mesure selon l'une des revendications 1 à 9, dans laquelle ledit premier milieu (5) est un milieu opaque.

11. Méthode de mesure selon l'une des revendications 1 à 9, dans laquelle ledit premier milieu (5) est un pétrole brut.

12. Réfractomètre comportant une source lumineuse (1), un premier dioptre (7) composé d'un premier milieu (5) d'indice inconnu et d'un deuxième milieu (4) d'indice connu, un élément optique (3) adapté à diviser un rayon lumineux en deux rayons lumineux pour former un rayon de mesure et un rayon incident, l'intensité dudit rayon de mesure étant mesurée par un premier capteur (9), au moins un deuxième capteur (10) mesurant l'intensité d'un rayon lumineux réfléchi provenant de la réflexion dudit rayon lumineux incident sur ledit premier dioptre (7), et adapté pour que l'angle d'incidence du rayon lumineux incident par rapport à la direction normale au premier dioptre (7) est inférieur à l'angle critique et inférieur à 10°.

13. Réfractomètre selon la revendication 12, dans lequel ledit premier milieu (5) est contenu dans une enceinte comportant une enveloppe et le deuxième milieu (4).

14. Réfractomètre selon l'une des revendications 12 et 13, comportant un moyen de codage (2) du rayon lumineux émis par ladite source lumineuse (1) et comportant un moyen de décodage (11) des mesures effectuées par lesdits premier et deuxième capteurs (9, 10), ledit moyen de codage (11) échange des informations avec le moyen de codage (2).

15. Réfractomètre selon l'une des revendications 12 à 14, dans lequel l'élément optique (3) est constitué d'un deuxième dioptre (8) formé par la surface du premier milieu (4) située à l'extérieur de l'enceinte.

16. Réfractomètre selon l'une des revendications 12 à 14, dans lequel l'élément optique (3) est une lame semi-réfléchissante.

17. Réfractomètre selon l'une des revendications 12 à 16, comportant un capteur (13) mesurant l'intensité d'un rayon lumineux réfracté dans le premier milieu (5).

**Claims**

1. A method of measuring the refractive index of a first medium (5), comprising the following steps:

   - splitting a source light ray to form a reference light ray and an incident light ray,
   - directing the incident light ray onto a first diopter (7) composed of the first medium (5) and of a second medium (4) of known refractive index in order to produce a reflected light ray, the angle of incidence of the incident light ray relative to the direction normal to the first diopter being less than the critical angle and less than 10°,
   - measuring the intensity of the reference light ray in order to determine the intensity of the incident light ray,
   - measuring the intensity of said reflected light ray,
   - determining the refractive index of the first medium (5) taking into account at least the refractive index of the second medium (4), the intensity of the incident light ray and the intensity of the reflected light ray.

2. The method according to Claim 1, wherein the refractive index of the first medium (5) is determined by a formula which links the intensity of the incident light ray to the intensity of the reflected light ray at the first diopter (7), taking into account the refractive index of the first medium (5) and the refractive index of the second medium (4).

3. The method according to one of claims 1 and 2, wherein the refractive index of the first medium (5) is determined using the Fresnel formulae.

4. The method according to one of claims 1 to 3, wherein the incident light ray is coded.

5. The method according to claim 4, wherein the intensity of the incident light ray is varied in accordance with a periodic signal.

6. The method according to one of claims 4 and 5, wherein the average intensity of the incident light ray is varied according to an alternating signal.

7. The method according to one of the preceding claims, wherein said source light ray is split by reflection and refraction on a second diopter (8).

8. The method according to one of the preceding claims, wherein said first medium (5), of which the refraction index is known, is used, the intensity of said reference light ray and the intensity of the reflected light ray are measured and the ratio of the intensity of said reference light ray to the intensity of said incident light ray is determined by using a formula which links the intensity of the incident light ray to the intensity of the reflected light ray at said first diopter (7) taking into account the refractive Indices of the first medium (5) and of the second medium (4).

9. The measuring method according to one of the preceding claims, wherein the intensity of the light ray refracted in the first medium (5) is measured and the absorption of the refracted light ray by the first medium (5) is determined.

10. The measuring method according to one of claims 1 to 9, wherein said first medium (5) is an opaque medium.

11. The measuring method according to one of claims 1 to 9, wherein said first medium (5) is a crude oil.

12. A refractometer comprising a first light source (1), a first diopter (7) composed of a first medium (5) of unknown index and of a second medium (4) of known index, an optical element (3) suitable for splitting one light ray into two light rays in order to form a measurement ray and an incident ray, the intensity of said measurement ray being measured by a first sensor (9), at least one second sensor (10) measuring the intensity of a reflected light ray from the reflection of said incident light ray on said first diopter (7), and adapted so that the angle of incidence of the light ray relative to the direction normal to the first diopter (7) is less than the critical angle and is less than 10°.

13. The refractometer according to claim 12, wherein said first medium (5) is contained in an enclosure comprising a casing and the second medium (4).

14. The refractometer according to one of claims 12 and 13, comprising a coding means (2) of the light ray emitted by said light source (1) and comprising a means (11) of decoding measures carried out by said first and second sensors (9, 10), said coding means (11) exchanges information with the coding means (2).

15. The refractometer according to one of claims 12 to 14, wherein the optical element (3) Is made up by a second diopter (8) formed by the surface of the first medium (4) situated outside the enclosure.

16. The refractometer according to one of claims 12 to 14, wherein the optical element (3) is a semi-reflective lamina.

17. The refractometer according to one of claims 12 to 16, comprising a sensor (13) that measures the intensity of a light ray refracted in the first medium (5).

## Patentansprüche

1. Verfahren zum Messen der Brechungszahl eines ersten Mediums (5), umfassend folgende Schritte:

   - Teilen eines Quellenlichtstrahls, um einen Bezugslichtstrahl und einen Einfallslichtstrahl zu bilden,
   - Richten des Einfallslichtstrahls auf ein erstes Diopter (7), das aus dem ersten Medium (5) und einem zweiten Medium (4) bekannter Brechungszahl besteht, um einen reflektierten Lichtstrahl zu erzeugen, wobei der Einfallswinkel des Einfallslichtstrahls im Verhältnis zu der Richtung, die zum ersten Diopter senkrecht ist, kleiner als der Grenzwinkel und kleiner als 10° ist,
   - Messen der Stärke des Bezugslichtstrahls, um die Stärke des Einfallslichtstrahls zu bestimmen,
   - Messen der Stärke des reflektierten Lichtstrahls,
   - Bestimmen der Brechungszahl des ersten Mediums (5) unter Berücksichtigung mindestens der Brechungszahl des zweiten Mediums (4), der Stärke des Einfallslichtstrahls und der Stärke des reflektierten Lichtstrahls.

2. Verfahren nach Anspruch 1, wobei die Brechungszahl des ersten Mediums (5) durch eine Formel bestimmt wird, welche die Stärke des Einfallslichtstrahls mit der Stärke des Lichtstrahls verknüpft, der an dem ersten Diopter (7) reflektiert wird, unter Berücksichtigung der Brechungszahl des ersten Mediums (5) und der Brechungszahl des zweiten Mediums (4).

3. Verfahren nach einem der Ansprüche 1 und 2, wobei die Brechungszahl des ersten Mediums (5) mit den Fresnelschen Formeln bestimmt wird.

4. Verfahren nach einem der Ansprüche 1 bis 3, wobei der Einfallslichtstrahl codiert wird.

5. Verfahren nach Anspruch 4, wobei die Stärke des Einfallslichtstrahls gemäß einem periodischen Signal variiert wird.

**6.** Verfahren nach einem der Ansprüche 4 und 5, wobei die durchschnittliche Stärke des Einfallslichtstrahls gemäß einem Rechtecksignal variiert wird.

**7.** Verfahren nach einem der vorhergehenden Ansprüche, wobei der Quellenlichtstrahl durch Reflexion und Refraktion auf einem zweiten Diopter (8) geteilt wird.

**8.** Verfahren nach einem der vorhergehenden Ansprüche, wobei das erste Medium (5) verwendet wird, dessen Brechungszahl bekannt ist, die Stärke des Bezugslichtstrahls und die Stärke des reflektierten Lichtstrahls gemessen wird, und das Verhältnis der Stärke des Bezugslichtstrahls zur Stärke des Einfallslichtstrahls unter Verwendung einer Formel, welche die Stärke des Einfallslichtstrahls mit der Stärke des Lichtstrahls, der an dem ersten Diopter (7) reflektiert wird, verknüpft, unter Berücksichtigung der Brechungszahlen des ersten Mediums (5) und des zweiten Mediums (4) bestimmt wird.

**9.** Messverfahren nach einem der vorhergehenden Ansprüche, wobei die Stärke des Lichtstrahls gemessen wird, der in dem ersten Medium (5) gebrochen wird, und die Absorption des gebrochenen Lichtstrahls durch das erste Medium (5) bestimmt wird.

**10.** Messverfahren nach einem der Ansprüche 1 bis 9, wobei das erste Medium (5) ein undurchsichtiges Medium ist.

**11.** Messverfahren nach einem der Ansprüche 1 bis 9, wobei das erste Medium (5) ein Rohöl ist.

**12.** Refraktometer, umfassend eine Lichtquelle (1), ein erstes Diopter (7), das aus einem ersten Medium (5) bekannter Brechungszahl und einem zweiten Medium (4) bekannter Brechungszahl besteht, ein optisches Element (3), das dazu geeignet ist, einen Lichtstrahl in zwei Lichtstrahlen zu teilen, um einen Messstrahl und einen Einfallsstrahl zu bilden, wobei die Stärke des Messstrahls von einem ersten Sensor (9) gemessen wird, wobei mindestens ein zweiter Sensor (10) die Stärke eines reflektierten Lichtstrahls misst, der aus der Reflexion des Einfallslichtstrahls auf dem ersten Diopter (7) stammt, und das dazu geeignet ist, dass der Einfallswinkel des Einfallsstrahls im Verhältnis zu der Richtung, die zum ersten Diopter (7) senkrecht ist, kleiner als der Grenzwinkel und kleiner als 10° ist.

**13.** Refraktometer nach Anspruch 12, wobei das erste Medium (5) in einer Einfassung enthalten ist, die eine Hülle und das zweite Medium (4) umfasst.

**14.** Refraktometer nach einem der Ansprüche 12 und 13, umfassend ein Mittel (2) zum Codieren des Lichtstrahls, der von der Lichtquelle (1) emittiert wird, und umfassend ein Mittel (11) zum Decodieren der Messungen, die von den ersten und zweiten Sensoren (9, 10) vorgenommen werden, wobei das Decodiermittel (11) mit dem Codiermittel (2) Informationen austauscht.

**15.** Refraktometer nach einem der Ansprüche 12 bis 14, wobei das optische Element (3) aus einem zweiten Diopter (8) besteht, das von der Oberfläche des ersten Mediums (4) gebildet wird, die außerhalb der Einfassung liegt.

**16.** Refraktometer nach einem der Ansprüche 12 bis 14, wobei das optische Element (3) ein halbreflektierendes Plättchen ist.

**17.** Refraktometer nach einem der Ansprüche 12 bis 16, umfassend einen Sensor (13), der die Stärke eines Lichtstrahls misst, der von dem ersten Medium (5) gebrochen wird.

FIG.1

1

2

12

A

3

B

C

9

11

5

6

7

E

4

10

13

D

FIG.4

i

re

1

q

2

ra

## FIG.2

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 043667 A
- US 3650631 A
- US 5946096 A